(19) Europäisches Patentamt

European Patent Office

Office européen des brevets

(11) **EP 1 560 879 B1**

(12) **EUROPÄISCHE PATENTSCHRIFT**

(45) Veröffentlichungstag und Bekanntmachung des Hinweises auf die Patenterteilung:
**07.06.2006 Patentblatt 2006/23**

(21) Anmeldenummer: **04739875.5**

(22) Anmeldetag: **14.06.2004**

(51) Int Cl.:
*C08K 9/04* (2006.01)          *C08K 3/34* (2006.01)

(86) Internationale Anmeldenummer:
**PCT/EP2004/006397**

(87) Internationale Veröffentlichungsnummer:
**WO 2004/111122 (23.12.2004 Gazette 2004/52)**

(54) **VERFAHREN ZUR HERSTELLUNG VON NANOCOMPOSIT-ADDITIVEN MIT VERBESSERTER DELAMINIERUNG IN POLYMEREN**

METHOD FOR PRODUCING NANOCOMPOSITE ADDITIVES WITH IMPROVED DELAMINATION IN POLYMERS

PROCEDE DE PRODUCTION D'ADDITIFS-NANOCOMPOSITES A DELAMINATION AMELIOREE DANS DES POLYMERES

(84) Benannte Vertragsstaaten:
**AT BE BG CH CY CZ DE DK EE ES FI FR GB GR HU IE IT LI LU MC NL PL PT RO SE SI SK TR**

(30) Priorität: **12.06.2003 DE 10326977**

(43) Veröffentlichungstag der Anmeldung:
**10.08.2005 Patentblatt 2005/32**

(73) Patentinhaber: **SÜD-CHEMIE AG
80333 München (DE)**

(72) Erfinder:
• **SEELING, Rainer
  50189 Elsdorf-Grouven (DE)**
• **METZEMACHER, Heinz-Dieter
  50737 Köln (DE)**
• **SCHALL, Norbert
  85659 Forstern (DE)**
• **LÜBBE, Günther
  76135 Karlsruhe (DE)**

(74) Vertreter: **Westendorp, Michael Oliver et al
Patentanwälte
Splanemann Baronetzky Westendorp
Rumfordstrasse 7
80469 München (DE)**

(56) Entgegenhaltungen:
**EP-A- 0 554 776          EP-A- 0 905 204
WO-A-93/04118**

EP 1 560 879 B1

**Beschreibung**

Die Erfindung betrifft ein Verfahren zur Modifikation, insbesondere zur Oberflächenmodifikation eines organophilen Tonmaterials, ein modifiziertes organophiles Tonmaterial, wie es mit dem erfindungsgemäßen Verfahren erhalten werden kann, eine Polymerzusammensetzung, welche das modifizierte organophile Tonmaterial enthält, die Verwendung des modifizierten organophilen Tonmaterials, präexfolierte Nanokomposit-Additive, sowie eine Nanokomposit-Zusammensetzung.

Die Eigenschaften von Kunststoffen oder allgemein polymeren Werkstoffen können durch die Zugabe von Nanokomposit-Additiven verbessert werden. Diese ermöglichen eine Modifikation der mechanischen Eigenschaften oder der Gaspermeation. Ferner können durch die Zugabe von Nanokomposit-Additiven beispielsweise die Flammschutzeigenschaften verbessert werden. Während der Verbrennung des Polymers bildet sich eine stabile Krustenschicht aus, welche ein weiteres Entzünden des Polymers zurückdrängt.

Nanokomposit-Additive bestehen aus natürlichen oder synthetischen Schichtsilicaten, deren Oberflächen durch organische Moleküle modifiziert sind. Durch die organische Modifizierung wird eine Anpassung der Oberflächenpolarität der Nanokomposit-Additive an die Polarität der Polymere erzielt, in welche die Nanokomposit-Additive eingearbeitet werden.

Nanokomposit-Additive werden beispielsweise hergestellt, indem ein quellfähiges Schichtsilicat, wie z.B. Montmorillonit oder Hectorit, in Wasser dispergiert und delaminiert wird. Die organische Modifizierung erfolgt beispielsweise durch die Zugabe quaternärer Ammoniumverbindungen, welche durch Kationenaustausch an die negativ geladenen Oberflächenschichten der Silicatlamellen gebunden werden. Durch die Polarität der organischen Komponente kann die Polarität des organisch modifizierten Schichtsilicats beeinflusst werden und damit auf die Polarität der verwendeten Kunststoffe abgestimmt werden. Zur Einarbeitung der Nanokomposit-Additive in Polymere können zwei Wege beschritten werden:

a) in-situ Polymerisation
Bei der in-situ Polymerisation wird das Nanokomposit-Additiv in einem Monomer dispergiert, wobei eine Delaminierung der Schichten des Schichtsilicats eintritt. Das Monomer kann auch in dem Zwischenraum zwischen benachbarten Silicatschichten eindringen und dort eine Schichtaufweitung bewirken. Während der anschließenden Polymerisation polymerisieren auch die in die Zwischenräume eingedrungenen Monomeren, wodurch die Silicatschichten voneinander abgetrennt werden. In einem anschließenden Dispergierschritt erfolgt eine weitgehende Delaminierung der Schichten. Um eine möglichst vollständige Delaminierung zu erreichen, muss das Nanokomposit-Additiv in seinen Oberflächeneigenschaften sowohl mit dem Monomer wie auch mit dem entstehenden Polymer kompatibel sein.
b) Schmelzkompoundierung
Bei der Schmelzkompoundierung wird das pulverförmige Nanokomposit-Additiv in einem Extruder in der Polymerschmelze dispergiert. Bei hinreichender Kompatibilität der Oberflächeneigenschaften des Nanokomposit-Additivs mit dem Polymer tritt bereits beim Extrusionsprozess eine Delaminierung der organisch modifizierten Schichtsilicatlamellen auf.

Eine möglichst vollständige Delaminierung des Nanokomposit-Additivs ist Voraussetzung dafür, dass die gewünschten Verbesserungen der mechanischen Eigenschaften, der Gaspermeation und des Flammschutzes im Kunststoff erreicht werden.

Die bisher als Zusätze für Kunststoffe verwendeten Nanokomposit-Additive bestehen aus einem Schichtsilicat, welches mit einer kationischen organischen Komponente und gegebenenfalls noch weiteren, die Polarität des Schichtsilicats beeinflussenden Komponenten, modifiziert ist. Für die Herstellung der Nanokomposit-Additive wird zunächst das Schichtsilicat in Wasser dispergiert und anschließend bei einer Temperatur von ca. 80°C die kationische organische Komponente zugegeben. Nach Zugabe der kationischen organischen Komponente folgt eine Ausfällung des modifizierten Schichtsilicats, welches anschließend durch Filtration abgetrennt, getrocknet und gemahlen wird. So wird in der US 4,695,402 ein Verfahren zur Herstellung organisch modifizierter Bentonite beschrieben. Dabei wird eine Aufschlämmung des Schichtsilicats zunächst unter hochscherenden Bedingungen gerührt und anschließend ein organisches Kation in einer Menge zugegeben, welche ungefähr 90 bis 150 % der Kationenaustauschkapazität des Schichtsilicats entspricht. Das organisch modifizierte Schichtsilicat wird aus der Aufschlämmung abgetrennt und anschließend unter schonenden Bedingungen unterhalb ungefähr 50°C getrocknet. Als organische Kationen können beispielsweise Ammonium-, Phosphonium- oder Sulfoniumverbindungen verwendet werden, welche langkettige lineare oder verzweigte Alkylketten tragen.

In der US 5,429,999 wird ein organisch modifiziertes Schichtsilicat hergestellt, indem zunächst ein Schichtsilicat, beispielsweise Montmorillonit, Bentonit oder Hectorit, in Wasser aufgeschlämmt wird. Die Aufschlämmung wird auf Temperaturen von etwa 70°C aufgewärmt und dann nacheinander zwei verschiedene organische Kationen zugegeben.

Als organische Kationen können beispielsweise quaternäre Ammoniumsalze, Phosphoniumsalze, Sulfoniumsalze sowie deren Mischungen verwendet werden. Die zur Aufschlämmung zugegebene Menge des ersten organischen Kations entspricht dabei etwa 75 bis 150% der Kationenaustauschkapazität des Schichtsilicats. Die Menge des zweiten organischen Kations entspricht etwa 0,01 bis 20 Gew.-%, bezogen auf die Gesamtmenge des organischen Kations. Anschließend werden ein oder mehrere organische Anionen zugegeben, welche mit dem ersten und/oder zweiten organischen Kation reagieren können, um einen Komplex mit dem Schichtsilicat zu bilden. Das erste organische Kation enthält hydrophobe Gruppen, während das zweite organische Kation hydrophile Gruppen enthält. Das Reaktionsprodukt wird anschließend durch Filtration abgetrennt und unter milden Bedingungen getrocknet.

In der EP 0 627 480 A1 wird ein organisch modifiziertes Schichtsilicat beschrieben, welches erhalten wird, indem zunächst eine wässrige Aufschlämmung eines Schichtsilicats hergestellt wird. Die Aufschlämmung wird auf Temperaturen von etwa 70°C erwärmt und anschließend ein organisches Kation zugegeben. Das organophile Schichtsilicat kann weiterhin ein organisches Anion, wie Natriumstearat, enthalten. Sowohl die Zugabe des organischen Kations als auch des organischen Anions erfolgt zur wässrigen Aufschlämmung des Schichtsilicats. Das Reaktionsprodukt wird durch Filtration abgetrennt und anschließend unter milden Bedingungen getrocknet.

In der US 4,874,728 wird ein organophiles Schichtsilicat beschrieben, welches erhalten wird, indem zu einer wässrigen Aufschlämmung eines Schichtsilicats zunächst ein quaternäres Ammoniumsalz gegeben wird, welches langkettige Alkylgruppen trägt. Das Reaktionsprodukt wird anschließend durch Filtration abgetrennt und getrocknet.

In der US 4,866,018 wird ein organophiles Schichtsilicat beschrieben, welches erhalten wird, indem zu einer wässrigen Aufschlämmung eines Schichtsilicats eine quaternäre Ammoniumverbindung gegeben wird, gefolgt von der Zugabe eines organischen Zirkonium-Aluminium-Komplexes. Das Reaktionsprodukt wird anschließend durch Filtration abgetrennt und getrocknet.

Die Herstellung organophiler Bentonite in Form eines Trockenmischprozesses unter Umgehung der Vordispergierung des Natriumbentonits in Wasser ist beispielsweise in der US 4,474,706 beschrieben. Dabei wird ein im Wesentlichen trockener, quellbarer Ton ohne Zusatz von Wasser mit einer organischen Ammoniumverbindung umgesetzt. Dazu wird der Ton und die Ammoniumverbindung bei Temperaturen vermischt, die oberhalb des Schmelzpunktes der Ammoniumverbindung liegen. Die Komponenten werden so lange miteinander vermischt, bis alle Flüssigkeit aus der Reaktionsmischung entfernt ist und ein organisch modifizierter Ton erhalten wird. Die Umsetzung der Ammoniumverbindung mit dem Ton kann durch die Zunahme des Abstandes zwischen benachbarten Schichten des Tons festgestellt werden. Für die Modifikation werden bevorzugt Mischungen verschiedener Ammoniumverbindungen verwendet. Die Ammoniumsalze können einzeln oder als Mischung in beliebiger Reihenfolge zum trockenen Ton gegeben werden. Die Temperatur, bei welcher die Vermischung der Komponenten stattfindet, muss höher gewählt sein als der Schmelzpunkt der am höchsten schmelzenden quaternären Ammoniumverbindung. Der modifizierte Ton kann anschließend mit Wasser gewaschen und dann erneut getrocknet und gegebenenfalls gemahlen werden. Um eine Reaktion zwischen Ton und Ammoniumsalz zu erreichen, ist eine intensive Vermischung der Komponenten erforderlich. Diese kann bei einer Umsetzung im Labormaßstab beispielsweise durch Verwendung eines Mörsers und Pistills verreicht werden. Bei einer Umsetzung im industriellen Maßstab können beispielsweise ein Bandmischer (ribbon blender) oder ein Extruder verwendet werden. Während dem Vermischen wird eine leichte Erwärmung der Reaktionsmischung beobachtet, welche durch Verdichtung und Reibung erzeugt wird.

Die EP 0 905 204 A2 betrifft oberflächenmodifizierte Pigmente auf der Basis plättchenförmiger Substrate mit einem verbesserten Absetz- und Aufrührverhalten sowie deren Herstellungsverfahren und Verwendung. Das Herstellungsverfahren ist dadurch gekennzeichnet, dass man in ein Mischgefäß plättchenförmige Substrate mit einem Schichtsilicat, vorzugsweise aus der Gruppe der Smektite, trocken mischt.

Die WO 93/04118 A1 betrifft ein Verfahren zur Herstellung eines polymeren Nanokomposits, enthaltend eine kontinuierliche polymere Phase, die aus einem schmelzprozessierbaren Polymer und plättchenförmigen Teilchen mit einer durchschnittlichen Dicke von 50 Å oder weniger gebildet wird, und ein nach diesem Verfahren erhältliches polymeres Nanokomposit.

Die EP 0 554 776 A1 betrifft neuartige flockenförmige Pigmente mit einer durchschnittlichen Teilchengröße zwischen 5 und 60 $\mu$m in der Form von Kompositpartikeln basierend auf einem geordneten Gemisch, wobei die Kompositteilchen gebildet werden, indem ein Gemisch, bestehend aus einem flockenförmigen Substrat und einem Pigment und/oder einem Farbstoff, wie in der EP 0 554 776 A1 näher definiert, bei hoher Geschwindigkeit in Abwesenheit eines flüssigen Mediums gerührt wird.

In der DE 31 45 043 A1 wird ein Verfahren zur Herstellung organophiler Tone beschrieben. Ein fein vermahlener, trockener Rohton wird mit einer Lösung einer organischen Verbindung besprüht. Die organische Verbindung ist beispielsweise ein quaternäres Ammoniumsalz, welches mit langkettigen organischen Gruppen modifiziert ist. Der besprühte Ton wird dann mehrmals trocken verdichtet und dann erneut zermahlen, um einen organophilen Ton herzustellen. Für die Herstellung des organisch modifizierten Tons wird in den Beispielen die Tonprobe zunächst in einen Mischer eingebracht und genug Wasser zugegeben, um den Ton auf einen Feuchtigkeitsanteil von 12 Gew.-% einzustellen. Dann wird die erforderliche Menge des in Wasser gelösten quaternären Ammoniumsalzes zugegeben und der Ansatz gründlich vermischt. Nach dem Mischen wird die Probe durch ein Doppelrollenwerk geschickt, in welchem das Reaktionsgemisch unter hohem Druck verdichtet wird. Der resultierende verdichtete organophile Ton braucht nicht weiter getrocknet zu werden, sondern wird lediglich zerkleinert und auf die gewünschte Korngröße gesiebt.

In der WO 97/31873 wird ein Verfahren zur Herstellung eines organisch modifizierten Tons beschrieben, welcher nach einem trockenen Verfahren hergestellt wurde, und der direkt als Additiv in Lösungsmittel eingebracht werden kann. Dazu wird der Ton mit einer Mischung eines quaternären Ammoniumsalzes und einem aprotischen polaren Lösungsmittel behandelt, das ausgewählt ist aus Propylencarbonat, Ethylencarbonat, N,N-Dimethylformamid, N,N-Dimethylacetamid und Dimethylsulfoxid. Die Reaktion wird üblicherweise bei Raumtemperatur oder erhöhten Temperaturen durchgeführt, wobei die Reaktionsmischung so lange durchmischt wird, bis das polare aprotische Lösungsmittel mit den Tonpartikeln reagieren kann. Zum Vermischen können übliche Mischer oder Extruder verwendet werden, die eine ausreichende Scherwirkung bereitstellen, um eine Reaktion des Tons mit den organischen Materialien zu bewirken. Nach der Reaktion kann das erhaltene Produkt noch gegebenenfalls getrocknet und vermahlen werden.

Um die Nanokomposit-Additive technisch einsetzen zu können, müssen diese im Polymer exfoliert werden. Bei dieser Exfolierung geht die ursprüngliche Nahordnung in den Schichtsilikaten verloren. Die Schichtsilikate werden in einzelne Plättchen aufgespalten, die nur noch einzelne Silikatschichten umfassen. Vollständig exfolierte Smectite können plättchenförmige Partikel ausbilden, die ein sehr hohen Aspektverhältnis von bis zu 1000 Aufweisen. Diese Partikel entsprechen Plättchen mit einer Dicke im Bereich von etwa 1 nm, einer Breite von ca. 100 nm und einer Länge im Bereich von etwa 500 bis 1.000 nm. Bei der Einarbeitung der Nanokomposit-Additive in eine Kunststoffmatrix wird bei einigen Polymeren zwar eine Erhöhung des Schichtabstandes beobachtet, d.h., das Polymer wird zum Teil in Zwischenräume zwischen benachbarten Lamellen des Schichtsilicats eingelagert. Es findet jedoch keine vollständige Exfolierung des Nanokomposit-Additivs im Polymer statt. Im Polymer liegen noch größere Partikel vor, die aus Agglomeraten der oben beschriebenen Plättchen gebildet werden. Dies wirkt sich ungünstig auf die mechanischen Eigenschaften und die Extrudierbarkeit der Polymerzusammensetzungen aus. Auch lassen sich die Nanokomposit-Additive nur schwer gleichmäßig in der Polymerzusammensetzung verteilen.

Der vorliegenden Erfindung lag daher die Aufgabe zugrunde, ein Verfahren zur Herstellung organisch modifizierter Schichtsilicate zur Verfügung zu stellen, welche bei der Einarbeitung in Kunststoffe eine verbesserte Delaminierung zeigen, d.h. bei denen während der Einarbeitung in eine Polymermasse eine nahezu vollständige Exfolierung erfolgt.

Diese Aufgabe wird mit einem Verfahren mit den Merkmalen des Patentanspruchs 1 gelöst. Vorteilhafte Ausführungsformen sind Gegenstand der abhängigen Patentansprüche.

Das erfindungsgemäße Verfahren zur Modifikation, insbesondere zur Oberflächenmodifikation eines organophilen Tonmaterials, umfasst die folgenden Schritte:

    a) Bereitstellen eines trockenen, pulverförmigen, organophilen Tonmaterials (Komponente a);
    b) Bereitstellen von mindestens einem Additiv (Komponente b) zur Modifikation der Komponente a);
    c) Intensives Vermischen der Komponenten a) und b) in einem hochscherenden Mischaggregat.

wobei kein Wasser oder Lösungsmittel zugesetzt wird oder für die Zugabe der Komponente b) verwendet wird, und wobei das mindestens eine Additiv (Komponente b) ausgewählt ist aus: Fettsäuren, Fettsäurederivate, nicht-anionischen organischen Komponenten mit mindestens einem aliphatischen oder cyclischem Rest mit 6 bis 32 Kohlenstoffatomen und/oder Siloxankomponenten. Das erfindungsgemäße Verfahren geht bereits von einem organophilen Tonmaterial aus. Als organophile Tonmaterialien können beispielsweise organisch modifizierte Nanokomposit-Additive verwendet werden, wie sie bereits für den Einsatz in Polymerzusammensetzungen bekannt sind. Durch die erfindungsgemäße Art der Umsetzung des organophilen Tonmaterials mit dem Additiv, wobei ein intensives Vermischen von organophilem Tonmaterial und Additiv in einem hochscherenden Mischaggregat erfolgt, wird ein modifi-ziertes organophiles Tonmaterial erhalten, welches sich beim Einarbeiten in eine Polymerzusammensetzung deutlich einfacher und vollständiger exfolieren lässt. Der Anteil an Aggregaten, welche aus mehreren Plättchen aufgebaut sind, lässt sich deutlich verringern. Dies lässt sich beispielsweise auf elektronenmikroskopischen Aufnahmen erkennen. Die Herstellung des organophilen Tonmaterials kann in an sich beliebiger Weise erfolgen. Bevorzugt wird das organophile Tonmaterial nach dem oben beschriebenen allgemeinen Verfahren hergestellt, bei dem zunächst eine wässrige Suspension eines Rohtons hergestellt und diese dann mit einem organischen Modifikationsagens umgesetzt wird. Hier kann auf bekannte Verfahren zurückgegriffen werden, wie sie beispielsweise in der Einleitung beschrieben worden sind.

Als Rohtone können übliche quellfähige Schichtsilikate eingesetzt werden. Diese können aus natürlichen Quellen gewonnen oder synthetisch hergestellt sein. Insbesondere geeignet sind Smektite, wie beispielsweise Montmorillonit, Hektorit, Saponit und Beidellit. Auch Bentonite können eingesetzt werden. Wegen der besseren Quellfähigkeit werden die Rohtone bevorzugt in ihrer Natriumform eingesetzt.

Als organisches Modifikationsagens können an sich alle bekannten Modifikationsagenzien eingesetzt werden. Insbesondere geeignet sind kationische organische Agenzien, wie beispielsweise Ammoniumverbindungen, die zumindest eine langkettige Kohlenstoffkette tragen, welche beispielsweise 12 bis 22 Kohlenstoffatome umfasst. Bevorzugt umfasst die Ammoniumverbindung bevorzugt zwei längerkettige Kohlenstoffketten. Die Kohlenstoffketten können gleich oder verschieden sowie linear oder verzweigt sein. Beispiele für geeignete Kohlenstoffketten sind Lauryl-, Stearyl-, Tridecyl-, Myristyl-, Pentadecyl- und Hexadecylgruppen. Beispiele für verzweigte längerkettige Kohlenstoffketten sind die 12-Methylstearyl- oder die 12-Ethylstearylgruppe. Eine besonders bevorzugte Kohlenstoffkette ist die Stearylgruppe. Die weiteren Valenzen des Stickstoffatoms sind bevorzugt durch kürzere Kohlenstoffketten abgesättigt, die 1 bis 22 Kohlenstoffatome umfassen können. Besonders bevorzugt werden die weiteren Valenzen des Stickstoffatoms durch Methylgruppen abgesättigt. Es ist jedoch auch möglich, dass die freien Valenzen durch Wasserstoffatome abgesättigt sind. Die am Stickstoff gebundenen Kohlenstoffketten können gesättigt oder ungesättigt sein und beispielsweise auch aromatische Gruppen umfassen. So kann die Ammoniumverbindung neben den langkettigen Kohlenstoffketten beispielsweise auch Benzylgruppen tragen. Die Ammoniumverbindungen können beispielsweise als Chloride eingesetzt werden. Neben den Ammoniumverbindungen können für die Herstellung des organophilen Tonmaterials beispielsweise auch die analogen Phosphonium- und Sulfoniumverbindungen verwendet werden. Organophile Tone, welche mit Ammoniumverbindungen modifiziert sind, sind als Ausgangsmaterial für das erfindungsgemäße Verfahren besonders bevorzugt.

Das organophile Tonmaterial wird mit Hilfe eines Additivs modifiziert. Als Additive zur Modifizierung des organophilen Tonmaterials können die folgenden Verbindungen eingesetzt werden:

Fettsäuren oder Fettsäurederivate, die bevorzugt ausgewählt sind aus Fettsäuren mit 10 - 13 Kohlenstoffatomen. Hier sind insbesondere Laurylsäure, Palmitinsäure, Stearinsäure, Oleinsäure, Linolsäure, Capronsäure und Rizinusöl zu nennen.

Die Fettsäurederivate umfassen beispielsweise hydrogenierte Derivate, Alkoholderivate, Aminderivate oder deren Mischungen. Sie können außerdem ausgewählt sein aus der Gruppe der polymeren Fettsäuren, der Ketofettsäuren, der Fettsäurealkyloxazoline und Fettsäurealkylbisoxazoline, oder deren Mischungen. Bei den ungesättigten Fettsäuren sind insbesondere die Mono- oder Poly-ungesättigten Hydroxyfettsäuren zu nennen.

Weiterhin können nicht anionische, organische Komponenten eingesetzt werden, die mindestens einen aliphatischen oder zyklischen Rest mit 6 - 32 Kohlenstoffatomen, vorzugsweise 8 - 22 Kohlenstoffatomen, insbesondere 10 - 18 Kohlenstoffatomen aufweisen. Besonders bevorzugt sind solche anionischen, organischen Komponenten Fettsäurederivate aus einer der nachstehenden Stoffklassen:

1. Fettalkohole, gesättigt oder ungesättigt, einschließlich primärer als auch sekundärer Alkohole, insbesondere mit $C_6$ - $C_{22}$-Resten;
2. Fettaldehyde, Fettketone;
3. Fettalkoholpolyglykolether;
4. Fettamine;
5. Mono-, Di- und Triglyzeridester;
6. Fettsäurealkanolamide;
7. Fettsäureamide;
8. Fettsäurealkylester;
9. Fettsäureglukamide;
10. Dicarbonsäureester;
11. Wachse;
12. wasserunlösliche fettsaure Seifen (hierunter sind die Salze aus langkettigen Carbonsäuren mit zweiwertigen Metallen zu verstehen;
13. Montanwachse (hierunter sind Wachse mit einer Kettenlänge von $C_{26}$ - $C_{32}$ zu verstehen);
14. Paraffine und PE-Wachse.

Besonders bevorzugt sind Fettalkohole, Fettamide, Triglyzeridester, Fettsäurealkylester und Wachse.

Weiterhin können Siloxankomponenten verwendet werden, worunter nach IUPAC-Richtlinie Oligomere oder polymere Siloxane oder Siloxanderivate zu verstehen sind. Siloxanderivate sind dabei vorzugsweise solche, bei denen mindestens eine der $CH_3$-Seitengruppen am Si-Atom durch eine andere funktionelle Gruppe ersetzt ist. Besonders bevorzugt sind, ohne Beschränkung, Oligoalkylsiloxane, Polydialkylarylsiloxane, Polydiarylsiloxane, oder eine Mischung davon, wobei die genannten Siloxanderivate besonders bevorzugt sind, die mit zumindest einer reaktiven Gruppe funktionalisiert worden sind.

Die Vermischung von organophilem Ton und Additiv wird beim erfindungsgemäßen Verfahren ohne Zusatz von Wasser oder einem anderen Lösungsmittel durchgeführt. Das organophile Tonmaterial weist bevorzugt einen sehr geringen Feuchtigkeitsgehalt bzw. Gehalt an Lösungsmittel auf, sodass keine Klumpenbildung beim Mischen auftritt bzw. keine plastische Verformung durchgeführt werden kann, wie sie beispielsweise beim Extrudieren erforderlich ist. Bevorzugt weißt das organophile Tonmaterial einen Feuchtigkeitsgehalt bzw. einen Lösungsmittelgehalt von weniger als 10 Gew.-%, insbesondere weniger als 5 Gew.-% auf. Das Additiv wird in Substanz zugegeben. Gegebenenfalls kann das Additiv vor der Zugabe aufgeschmolzen werden.

Das organophile Tonmaterial wird in Form eines Pulvers in das hochscherende Mischaggregat gegeben. Das organophile Tonmaterial wird dazu auf eine geringe Korngröße gemahlen. Bevorzugt liegt die mittlere Teilchengröße ($D_{50}$-Wert) unterhalb von 50 $\mu$m, bevorzugt unterhalb eines $D_{50}$-Wertes von 30 $\mu$m, insbesondere weniger als 8 $\mu$m. Die Schüttdichte des organophilen Tonmaterials beträgt vorzugsweise weniger als 300 g/l, und ist insbesondere bevorzugt im Bereich von 150 bis 250 g/l gewählt. Die Bestimmung des $D_{50}$-Wertes sowie der Schüttdichte wird weiter unten im experimentellen Teil der Beschreibung erläutert.

Die Vermischung des organophilen Tons und des Additivs erfolgt in einem hochscherenden Mischaggregat. Unter einem hochscherenden Mischaggregat wird dabei ein Mischer verstanden, in welchem die Komponenten des Gemischs unter hoher Scherwirkung miteinander vermischt werden, ohne dass dabei eine wesentliche Verdichtung oder Kompaktierung erfolgt. Während des Vermischens behält das Gemisch aus organophilem Tonmaterial und Additiv also die Form eines lockeren Pulvers. Nach dem Vermischen wird im Gegensatz zu den bisher bekannten Modifizierungsverfahren also unmittelbar ein Pulver erhalten, das beispielsweise in Polymerzusammensetzungen eingearbeitet werden kann. Es ist also nicht erforderlich, das modifizierte organophile Tonmaterial erneut zu vermahlen.

Während des Vermischens findet eine intensive Verwirbelung der Komponenten unter einem hohen Energieeintrag statt. Gleichzeitig wird während des intensiven Durchmischens eine Erhöhung der Temperatur des Mischgutes beobachtet. Zu Beginn des Mischvorgangs erfolgt eine annähernd gleichbleibende Stromaufnahme durch den Mischer. Nachdem der Mischvorgang weiter fortgeschritten ist, erhöht sich die Stromaufnahme des Mischer und damit auch der Energieeintrag in das Gemisch. Das Pulver beginnt zu agglomerieren. Ferner erhöht sich das Schüttgewicht des Pulvers. Der Mischvorgang wird bevorzugt in der Weise geführt, dass durch den durch die intensive Durchmischung bewirkten hohen Energieeintrag das Gemisch aus organophilem Tonmaterial und Additiv innerhalb weniger Minuten, beispielsweise 6 bis 8 Minuten, auf eine Temperatur verbracht wird, bei der die Stromaufnahme des Mischers nicht-linear ansteigt. Der Mischvorgang wird erst abgebrochen, nachdem beim Mischer für einige Zeit eine erhöhte Stromaufnahme beobachtet worden ist. Nach Überschreiten der optimalen Mischzeit erhöht sich die Stromaufnahme signifikant. Dies stellt ein Abbruchkriterium für den Mischprozess dar.

Es wird angenommen, dass durch die intensive Durchmischung bei erhöhter Temperatur ständig neue Oberflächen am organophilen Tonmaterial geschaffen werden, die in Kontakt zum Additiv gelangen. Es findet dabei eine Beschichtung der Oberfläche des organophilen Tonmaterials mit dem Additiv statt. Das Additiv wird vermutlich zum Teil in die Zwischenräume benachbarter Lamellen eingearbeitet. Es wird eine Veränderung der Porosität des organophilen Tonmaterials bewirkt, sowie eine Änderung der Kapillarkräfte. Dies verbessert die Delaminierbarkeit des modifizierten organophilen Tonmaterials in Polymeren deutlich. Neben der verbesserten Delaminierung wird auch eine verbesserte Fließfähigkeit des modifizierten organophilen Tonmaterials und eine verbesserte Dosierbarkeit beim Extrudierprozess beobachtet.

Bevorzugt wird das intensive Vermischen von organophilem Tonmaterial und Additiv bei erhöhter Temperatur durchgeführt. Wie bereits oben erwähnt, bewirkt der beim intensiven Vermischen erfolgende hohe Energieeintrag eine Erwärmung des Mischgutes, wobei nach einer anfänglichen Mischperiode eine nicht lineare Energieaufnahme des Mischers beobachtet wird.

Vorzugsweise erfolgt der Energieeintrag in das Mischgut nicht allein durch den Mischer, sondern das Mischgut wird zusätzlich erwärmt. Dazu wird das Mischgut, beispielsweise mit Hilfe eines Wärmemantels, gleichmäßig erwärmt. Für die Erwärmung kann beispielsweise ein lineares Wärmeprofil gewählt werden. Die Erwärmung wird vorzugsweise solange fortgeführt, bis eine nichtlineare Steigerung der Energieaufnahme des Mischers die Umsetzung zwischen organophilem Tonmaterial und Additiv anzeigt.

Vorzugsweise wird die Temperatur, bis zu welcher das aus organophilem Tonmaterial und Additiv gebildete Mischgut erwärmt wird, höher gewählt als der Schmelzpunktes des mindestens einen Additivs. Sofern mehr als ein Additiv im Mischgut vorhanden ist, wird die Temperatur so gewählt, dass sie oberhalb des Schmelzpunktes des höchstschmelzenden Additivs liegt.

Bevorzugt wird die Temperatur des Mischgutes während des intensiven Vermischens gesteigert. Wie bereits oben erläutert, kann die Temperatur des Mischgutes zunächst mit Hilfe einer zusätzlichen Wärmezufuhr gesteigert werden, bis die erhöhte Energieaufnahme des Mischers eine Umsetzung zwischen organophilem Tonmaterial und Additiv anzeigt. Auch nachdem dieser Punkt beim Vermischen von organophilem Tonmaterial und Additiv erreicht ist, wird die Temperatur vorzugsweise weiter gesteigert. Die Temperaturerhöhung kann dabei durch den Energieeintrag des Mischers oder durch eine externe Wärmezufuhr erfolgen.

Das intensive Mischen von organophilem Tonmaterial und Additiv wird bevorzugt in einem Temperaturbereich von 20 bis 200°C, insbesondere von 40 bis 150°C durchgeführt.

Wie bereits erläutert, nimmt das Schüttgewicht des organophilen Tonmaterials während dem intensiven Mischen zu. Vorzugsweise wird beim intensiven Vermischen eine Erhöhung des Schüttgewichts von mindestens 20 %, vorzugsweise mindestens 40 %, insbesondere 60 %, besonders bevorzugt 80 %, weiter bevorzugt mindestens 100 % bezogen auf das Schüttgewicht des eingesetzten pulverförmigen, organophilen Tonmaterials erzielt.

Die Komponenten des Mischguts, organophiles Tonmaterial und Additiv, werden unter hohem Energieeintrag miteinander vermischt. Der Energieeintrag lässt sich durch die Energieaufnahme des Mischers, also die beim intensiven Vermischen verbrauchte elektrische Leistung, bestimmen, welche dann in Relation zum Volumen des Mischgutes gesetzt wird. Bevorzugt erfolgt während des intensiven Vermischens ein Energieeintrag von mindestens 300 kW/m$^3$.

Das intensive Vermischen wird vorzugsweise so lange durchgeführt, bis eine Zunahme des Energieeintrags, gemessen anhand der Stromaufnahme des hochscherenden Mischaggregats, von mindestens 10 %, vorzugsweise mindestens 20 % erzielt wird.

Wie bereits erläutert, ist nach einer Induktionsperiode eine nichtlinerare Zunahme des Energieeintrags des Mischaggregats zu beobachten. Vorzugsweise wird die intensive Vermischung solange fortgeführt, bis die Zunahme des Energieeintrags am Ende des intensiven Mischens gemäß Anspruch 1 c), gemessen anhand der Stromaufnahme des hochscherenden Mischaggregats, im Bereich zwischen 10 und 50 %, insbesondere zwischen 20 und 30 %, ausgehend von der Stromaufnahme des hochscherenden Rühraggregats zu Beginn des intensiven Vermischens, liegt.

Insbesondere wird das intensive Vermischen zumindest so lange durchgeführt, bis die Stromaufnahme des Mischaggregats innerhalb einer Minute um mindestens 20 % zunimmt.

Sofern die vorstehend beschriebene Zunahme der Stromaufnahme nicht nach einer Gesamtzeitdauer des intensiven Vermischens von etwa 5 Min. erreicht wird, wird das verwendete hochscherende Mischaggregat vorzugsweise zusätzlich beheizt.

Während des intensiven Vermischens behält das eingesetzte organophile Tonmaterial die Form eines Pulvers. Durch die intensive Verwirbelung der Partikel wird das organophile Tonmaterial mit dem Additiv umgesetzt und beschichtet. Die Intensität des Mischvorgangs sowie dessen Dauer wird dabei so gewählt, dass die Partikelgröße, gemessen als D$_{50}$, um nicht mehr als 10 % während des intensiven Vermischens zunimmt. Besonders bevorzugt nimmt die Partikelgröße, gemessen als D$_{50}$, nicht zu oder fällt sogar. Die Veränderung der Partikelgröße des modifizierten organophilen Tonmaterials bezieht sich jeweils auf die ursprüngliche Partikelgröße, gemessen als D$_{50}$, der zum intensiven Vermischen eingesetzten Komponente a). Bevorzugt liegt die Partikelgröße D$_{50}$ des modifizierten organophilen Tonmaterials im Bereich von etwa 20 bis 5 $\mu$m.

Während des intensiven Vermischens nimmt das Schüttgewicht des organophilen Tonmaterials zu. Das Vermischen wird bevorzugt abgebrochen, wenn das Schüttgewicht sich gegenüber dem anfänglichen Schüttgewicht der Komponente a) um höchstens 200% erhöht hat. Durch das intensive Vermischen erhöht sich das Schüttgewicht also auf maximal das dreifache des Schüttgewichts des unbehandelten organophilen Tonmaterials. Bevorzugt liegt das Schüttgewicht des modifizierten organophilen Tonmaterials im Bereich von 400 bis 550 g/l.

Das Additiv wird in Substanz zum organophilen Tonmaterial zugegeben. Gemäß einer Ausführungsform des erfindungsgemäßen Verfahrens wird sowohl die Komponente a) als auch die Komponente b) in Pulverform eingesetzt. Die pulvrig feinkörnigen Festsstoffe verhalten sich beim Mischen wie eine Flüssigkeit. Es entsteht eine Thrombenbildung, sodass das Produkt in horizontaler und vertikaler Richtung intensiv bewegt wird. Der intensive Energieeintrag führt zu einer Temperaturerhöhung des Mischgutes bis zu einer nicht-linearen Erhöhung der Stromaufnahme des Mischers, resultierend in einer Erhöhung des Schüttgewichtes des Pulvers. Es können jedoch auch Additive verwendet werden, die bei Raumtemperatur flüssig sind. Diese werden vorzugsweise in einer Weise zum organophilen Tonmaterial gegeben, dass unmittelbar eine intensive Vermischung erfolgt, das Additiv also nicht zu einer Verklumpung des organophilen Tonmaterials führt. Bevorzugt wird das flüssige Additiv in der Nähe eines sich beim Verwirbeln des organophilen Tonmaterials ausbildenden Thrombus gegeben. Die Mischung aus organophilem Tonmaterial und Additiv wird im Mischaggregat in einer Art und Weise agitiert, sodass bei Umfangsgeschwindigkeiten bis zu 200 m/s eine Thrombenbildung auftritt. Beim Mischvorgang wird in der Mitte des Mischgefäßes eine Kegelbildung beobachtet., d.h. das Mischgut wird während des intensiven Mischvorgangs in Form eines Kegels zum Boden des Mischaggregats gezogen.

Beim erfindungsgemäßen Verfahren liegt das organophile Tonmaterial sowohl vor als auch nach der Modifizierung in Form eines Pulvers vor. Bevorzugt wird das erhaltene modifizierte organophile Tonmaterial so, wie es nach dem intensiven Vermischen anfällt, weiterverarbeitet und beispielsweise in ein Polymer eingearbeitet. Vorzugsweise wird nach dem Vermischen kein getrennter Kompaktierungsschritt oder Verdichtungsschritt durchgeführt, um das modifizierte organische Tonmaterial weiter zu bearbeiten.

Gemäß einer besonders bevorzugten Ausführungsform erfolgt unmittelbar nach dem intensiven Vermischen ein Abkühlen der Mischung. Dazu wird das modifizierte organophile Tonmaterial bevorzugt auf Temperaturen von weniger als etwa 40°C, insbesondere weniger als etwa 30°C, insbesondere bevorzugt von etwa 20 bis 40°C abgekühlt.

Das Abkühlen erfolgt bevorzugt über einen Zeitraum, welcher dem 1- bis 3-fachen der Zeitdauer des vorangegangenen intensiven Vermischens gemäß Anspruch 1 c) entspricht.

Das abgekühlte modifizierte organische Tonmaterial kann dann aus dem Mischaggregat entnommen und beispielsweise bis zur Weiterverarbeitung in geeignete Gebinde verpackt werden.

Bevorzugt erfolgt das Abkühlen des modifizierten organophilen Tonmaterials aktiv über eine Kühlung der Mischung bzw. des zur intensiven Vermischung verwendeten hochscherenden Mischaggregats.

Das Abkühlen des modifizierten organophilen Tonmaterials erfolgt bevorzugt in einem getrennten, kühlbaren Mischer.

Während des Abkühlens kann die Mischung weiter agitiert, insbesondere weiter intensiv vermischt werden.

Als hochscherendes Mischaggregat wird bevorzugt ein Heiz-Kühl-Mischer oder eine Kombination aus einem Heizmischer und einem Kühlmischer verwendet. Die Heiz- bzw. Kühlmischer können unabhängig voneinander z.B. mit Wasser/Dampf oder Wärmeträgeröl oder elektrisch/ Heißluft/Luft- oder Wasserkühlung temperiert werden.

Für die Herstellung des modifizierten organophilen Tonmaterials ist es wesentlich, das eine intensive Verwirbelung von organophilem Tonmaterial und Additiv erfolgt. Bei der Wahl des Mischaggregats muss dies berücksichtigt werden. Das hochscherende Mischaggregat ist bevorzugt ausgewählt aus der Gruppe bestehend aus:

a) Schaufelmischer, wie z.B. Pflugscharmischer (Lödige Schnellmischer, Drais Schnellmischer, MTI-Turbinenmischer) mit sogenannten einfachen oder multiplen Kronenwerkzeugen;

b) Schneckenmischer, wie z.B. Schneckenmischer, die über eine Doppelschnecke verfügen, die entweder gleich oder gegenläufig arbeitet, Segmentschneckenmischer, z.B. coaxiale Kneter (BUSS Co-Kneter);

c) Fluidmischer, wie z.B. Kreiselmischer, mechanische oder pneumatische Fluidmischer z.B. Thyssen, Henschel, Papenmeier oder MTI-Heizmischer u.a.

Als hochscherendes Mischaggregat kann auch ein mechanischer Fluidmischer verwendet werden, der nach dem Fließbettprinzip arbeitet.

Es können zum intensiven Vermischen auch hochscherende Mischaggregate verwendet werden, welche Rührwerkzeuge und vorzugsweise mindestens ein Ableitblech aufweisen. Die Rührwerkzeuge sind vorzugsweise aus Edelstahl, insbesondere aus martensitischen Stählen, aus RC40 und höher gehärteten Stählen hergestellt. Des weiteren sind sie vorzugsweise korrosionsresistent. Idealerweise sind die Fluidisiermesser u.a. mit "Stellite K12" Hartmetallaufschweissung an allen relevanten Stellen gepanzert. Der Abstand des Bodenräumers vom Mischerboden wird bevorzugt auf einen durch das Austragsmaterial definierten Minimalabstand einjustiert und die anderen Fluidisierflügel und das Hornwerkzeug so angeordnet, dass mit den Fluidisierflügeln bei einem gewählten Füllgrad des Schnellmischers die erforderlichen Temperaturen zuverlässig erreicht werden können.

Um die notwendig Fluidisierung optimal zu garantieren, sind minimal 1, vorzugsweise 2 oder mehr Ableitbleche installiert. Diese sind in einer Art und Weise angeordnet, dass das oberflächenmodifizierte organophile Tonmaterial optimal durchwirbelt wird.

Das mit dem erfindungsgemäßen Verfahren erhaltene modifizierte organophile Tonmaterial zeigt bei der Einarbeitung in Polymere eine verbesserte Delaminierung. Außerdem zeigen diese modifizierten organophilen Tonmaterialien ein besseres Fließverhalten und ermöglichen eine leichtere Dosierung bei der Verarbeitung von Kunststoffen in einem Extruder.

Gegenstand der Erfindung ist daher auch ein modifiziertes organophiles Tonmaterial, insbesondere oberflächenmodifiziertes teilchenförmiges, organophiles Tonmaterial, welches mit dem oben beschriebenen Verfahren erhältlich ist. Durch das erfindungsgemäße Verfahren erhöht sich das Schüttgewicht des erfindungsgemäßen modifizierten organophilen Tonmaterials und die mittlere Teilchengröße verringert sich. Kennzeichnend für das erfindungsgemäße modifizierte organophile Tonmaterial ist vor allem seine bessere Delaminierung in Polymeren.

Das erfindungsgemäße modifizierte organophile Tonmaterial lässt sich gut in Polymermaterialien einarbeiten und wird dabei nahezu vollständig delaminiert (exfoliert). Auf diese Weise kann das erfindungsgemäße modifizierte organophile Tonmaterial diesen Polymermaterialien vorteilhafte Eigenschaften verleihen, wie beispielsweise eine Erhöhung der Feuerbeständigkeit oder der Kratzfestigkeit einer Polymeroberfläche. Ein weiterer Gegenstand der Erfindung ist daher eine Polymerzusammensetzung, welche das erfindungsgemäße modifiziertes organophiles Tonmaterial enthält.

Als Polymer ist in der Polymerzusammensetzung vorzugsweise zumindest ein Polymer enthalten, das ausgewählt ist aus der Gruppe, die gebildet ist aus Polyethylen und Copolymeren des Ethylens, wie HDPE (high density polyethylene), MDPE (medium density polyethylene), LLDPE, VLDPE, LDPE (low density polyethylene), ULDPE, Ethylen-Hexen-Copolymere, Ethylen-Octen-Copolymere, Polyisobutylen, Ethylen-Propylen-Copolymere (EPM), Terpolymere des Ethylen-Propylen-Dien (EPDM), EBM (Ethylen-Butylkautschuk), EPDM, Ethylen-Vinylsilan-Copolymere, Ter- oder Copolymere der Acrylsäure (EA), oder Ethylen mit Ethylenacrylat und Acrylsäure (EAA) oder Methacrylsäure (EMA), EEA (Ethylen-Ethylacrylat), EBA (Ethylen-Butylacrylat), EVA (Ethylen-Vinylacetat), gepfropfte Copolymere des Ethylens mit Maleinsäureanhydrid (MAH), Polyvinylchlorid (PVC), Polyamid-6, Polyamid-66, Polyamid-12, Polyamid-4, Polypropylen und Polypropylencopolymere, Polyacrylate und Polymethacrylate (PMMA), Polycarbonat (PC), Polybutylenterephthalate (PBT), Polyethylenterephthalat (PET), fluorierte polymere Kohlenwasserstoffe, Rubber, TPE's, Blockcopolymere, TPU und Polyurethane; TPO, Siliconpolymere.

Ein weiterer Gegenstand der Erfindung ist die Verwendung des erfindungsgemäßen modifizierten organophilen Tonmaterials als Additiv für eine Polymerzusammensetzung, insbesondere als Nanocomponsit-Additiv für eine Polymerzusammensetzung.

Weiter umfasst die Erfindung präexfolierte Nanocomposit-Additive, welche nach dem erfindungsgemäßen Verfahren erhältlich sind.

Ein weiterer Gegenstand der Erfindung ist eine Nanocomposit-Zusammensetzung, welche durch Einarbeiten des erfindungsgemäßen präexfolierten Nanocomposit-Additivs in eine Polymerzusammensetzung erhältlich ist.

Die Erfindung wird im weiteren anhand von Beispielen sowie unter Bezugnahme auf die beigefügten Figuren näher erläutert. Dabei zeigt:

Fig. 1: eine Grafik, in welcher die Temperatur des Mischgutes sowie die Stromaufnahme des Mischaggregats in Abhängigkeit von der Mischzeit angegeben ist;

Fig. 2: eine grafische Darstellung einer Partikelgrößenverteilung eines kommerziell erhältlichen organophilen Tonmaterials (Nanofil® 5; Südchemie AG);

Fig. 3: eine grafische Darstellung einer Partikelgrößenverteilung eines erfindungsgemäß modifizierten organophilen Tonmaterials.

Die in den Beispielen erwähnten Parameter wurden auf die folgende Weise bestimmt:

Partikelgrößenverteilung ($D_{50}$-Wert):
Die Korngrößenverteilung wurde mittels Laserbeugung im Mastersizer S (Malvern Instruments GmbH) in einem Bereich von 0,05 bis 900 $\mu$m ermittelt.
Eine Probe von ca. 50 mg wird in einem 20 ml-Becherglas mit ca. 10 ml Ethanol versetzt und 5 Minuten mittels Ultraschallfinger behandelt. Die Suspension wird in die Dispergiereinheit des Partikelgrößenanalysators überführt und so lange Ethanol zugegeben, bis die korrekte Konzentration der Probe am Messgerät eingestellt ist. Die Messung erfolgt gemäß dem Benutzerhandbuch. Am Ende der Messung wir das Ergebnis gespeichert und ausgedruckt.
Schüttgewicht:
Eine Probe des lufttrockenen Materials wird durch Schütteln in einem geschlossenen Gefäß belüftet, sodass keine mechanisch verdichteten Teile mehr in der Probe sind.

Ein 100 ml Messzylinder, welcher an der 100 ml-Markierung abgeschnitten ist, wird tariert (ml) und anschließend mit Hilfe eines In einem Halter aufgehängten Pulvertrichters innerhalb von etwa 20 Sekunden gefüllt. Nach 2 Minuten wird der Füllkegel mit einen Lineal abgezogen. Danach wird das Gewicht (m2) des vollen Messzylinders auf 0,01 g genau bestimmt.

$$\text{Schüttgewicht (g/l)} = (m2 - m1) \times 10$$

Energieaufnahme: Es wurde die Stromaufnahme des Henschel Heizmischers Typ FM 200 bestimmt.

Beispiele

Beispiel 1 (Vergleich)

100 g eines hochquellfähigen, natürlichen Natriumbentonits werden in Wasser bei einer Temperatur von T = 30° C hochscherend dispergiert. Die Feststoffkonzentration des Natriumbentonits in Wasser beträgt 3 %. Die Temperatur der Bentonitsuspension wird auf 70° C erhöht und eine vordispergierte Mischung bestehend aus 90 mmol Distearyldimethlymmoniumchlorid, 14 g Rapsölmethylester (Kebonal® 20, Fa. Kebo) und 6,16 g Polydiethylsiloxan (Litsolvent® PL, Fa. Kebo) zugegeben.

Nach Zugabe o.g. Mischung zum Natriumbentonit flockt der entstandene organophile Bentonit aus und wird filtriert und sprühgetrocknet. Das erhaltene Pulver weist ein Schüttgewicht von 240 g/l auf.

Von einer Probe des organophilen Tonmaterials wurde die Partikelgrößenverteilung gemessen. Die Werte sind in Tabelle 1 zusammengefasst.

Tabelle 1: Partikelgrößenverteilung des organophilen Tonmaterials aus Beispiel 1

| Größe (μm) | Volumen unter % | Größe (μm) | Volumen unter % | Größe (μm) | Volumen unter % | Größe (μm) | Volumen unter % |
|---|---|---|---|---|---|---|---|
| 0,060 | 0,00 | 0,600 | 1,17 | 7,0 | 63,23 | 70,00 | 100,00 |
| 0,070 | 0,00 | 0,700 | 1,44 | 10,00 | 82,58 | 80,00 | 100,00 |
| 0,080 | 0,00 | 0,800 | 1,73 | 15,00 | 95,78 | 90,00 | 100,00 |
| 0,090 | 0,00 | 0,900 | 2,08 | 20,00 | 99,35 | 100,00 | 100,00 |
| 0,100 | 0,00 | 1,00 | 2,48 | 25,00 | 99,98 | 125, 0 | 100,00 |
| 0,200 | 0,07 | 2,00 | 9,38 | 30, 00 | 100,00 | 150,0 | 100,00 |
| 0,300 | 0,31 | 3,00 | 20,19 | 40,00 | 100,00 | 175,0 | 100,00 |
| 0,400 | 0,61 | 4,00 | 32,22 | 50,00 | 100,00 | 200, 0 | 100,00 |
| 0,500 | 0,90 | 5,00 | 43,73 | 60,00 | 100,00 | 250,0 | 100,00 |

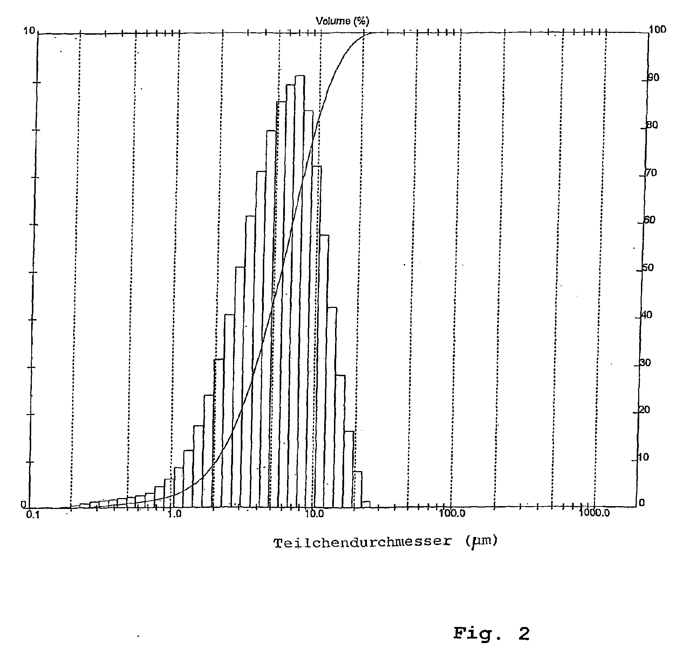

Die Partikelgrößenverteilung ist in Figur 2 graphisch dargestellt. Die aus dieser Partikelgrößenverteilung abgeleiteten Grenzwerte sind in Tabelle 1a zusammengefasst

Tabelle 1a: Grenzwerte für die Partikelgrößenverteilung

| Grenzwert | Größe (μm) |
|---|---|
| $D_{10}$ | 2,07 |
| $D_{50}$ | 5,59 |
| $D_{90}$ | 12,06 |
| $D_{100}$ | 26,20 |

Beispiel 2:

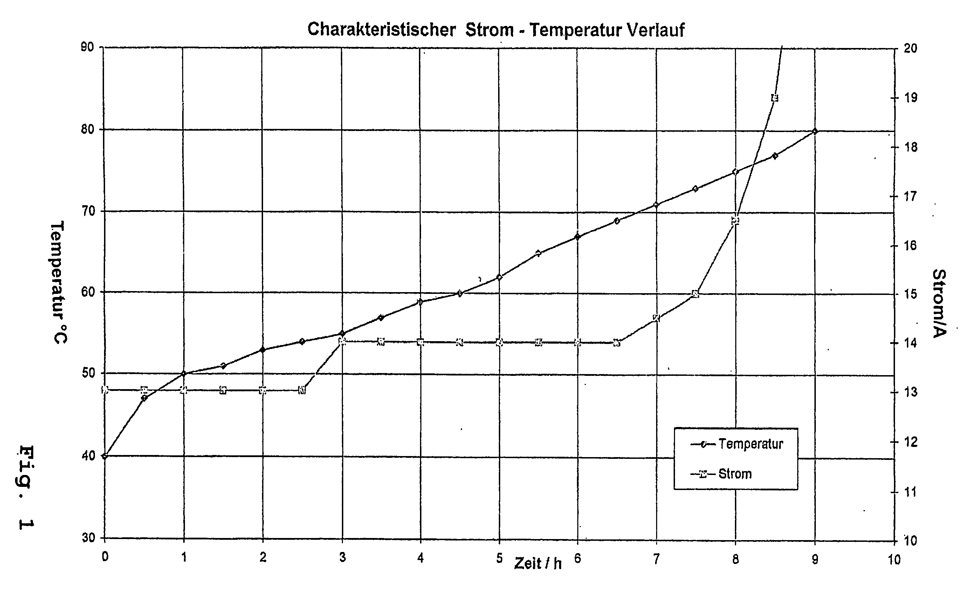

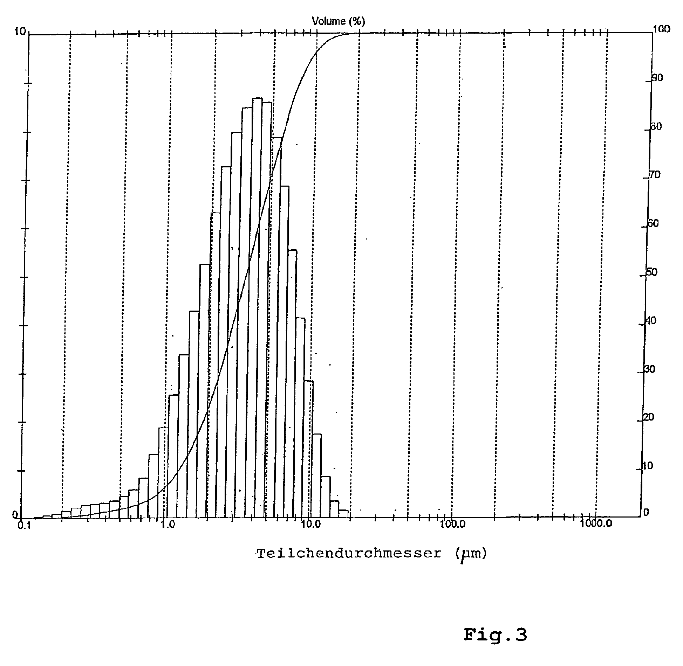

In einem Heizkühlmischer, Typ FM 200 - KM 1000 der Firma Thyssen Henschel werden 100 kg eines Nanoclays "Nanofil® 5" der SüdChemie AG mit einem Schüttgewicht von 240 g/l vorgelegt. Nanofil® 5 ist ein mit Distearyldimethylammoniumchlorid modifizierter Bentonit. Die Umdrehungsgeschwindigkeit des Mischers wird auf 1360 UpM (Umdrehungen pro Minute) eingestellt und es wird auf eine Temperatur von 45° C aufgeheizt. Bei dieser Temperatur werden 10 kg Rapsölmethylester (Kebonal® 20, Fa. Kebo) und 4,4 kg Polyethylsiloxan (Litsolvent® PL, Fa. Kebo) in der angegebenen Reihenfolge als Additiv über eine Zeitspanne von ca. 30 s zudosiert. Zur Gewährleistung einer homogenen Durchmischung erfolgt die Zugabe der Additive direkt in den durch das Mischwerkzeug erzeugten Thrombus. Bei der angegebenen Drehzahl wird der Reaktionsansatz bis zur Austragstemperatur von 80° C aufgeheizt.
Der Temperaturverlauf während des Mischprozesses ist der Figur 1 zu entnehmen, des weiteren der Verlauf der Stromaufnahme des Mischers. Es ist zu erkennen, dass bei linearer Temperaturerhöhung des Mischgutes bei den gewählten Bedingungen nach etwa 7,5 Minuten eine deutliche Stromaufnahme des Mischers beobachtet wird. Um eine vollständige Agglomeration des Pulvers, und damit letztendlich eine wiederum verschlechterte Dispergierbarkeit des Nanoclays in Polymeren zu verhindern, wird der Mischprozess bei einer Temperatur von 80° C und nach 7,5 Minuten abgebrochen.
Es wird ein mit den beiden Additiven oberflächenmodifiziertes organophiles Tonmaterial erhalten, welches ein Schüttgewicht von 480 g/l aufweist. Das modifizierte organophile Tonmaterial liegt als feinteiliges Pulver vor mit der in Tabelle 2 wiedergegebenen Teilchengrößenverteilung. Die Partikelgrößenverteilung ist auch in Figur 3 graphisch wiedergegeben.

Tabelle 2: Partikelgrößenverteilung des modifizierten organophilen Tonmaterials aus Beispiel 1

| Größe (μm) | Volumen unter % | Größe (μm) | Volumen unter % | Größe (μm) | Volumen unter % | Größe (μm) | Volumen unter % |
|---|---|---|---|---|---|---|---|
| 0,060 | 0,00 | 0,600 | 2,51 | 7,0 | 86,52 | 70,00 | 100,00 |
| 0,070 | 0,00 | 0,700 | 3,16 | 10,00 | 96,15 | 80,00 | 100,00 |

Tabelle fortgesetzt

| Größe (μm) | Volumen unter % | Größe (μm) | Volumen unter % | Größe (μm) | Volumen unter % | Größe (μm) | Volumen unter % |
|---|---|---|---|---|---|---|---|
| 0,080 | 0,01 | 0,800 | 3,97 | 15,00 | 99,64 | 90,00 | 100,00 |
| 0,090 | 0,02 | 0,900 | 5,01 | 20,00 | 100,00 | 100,00 | 100,00 |
| 0,100 | 0,02 | 1,00 | 6,21 | 25, 00 | 100,00 | 125,0 | 100,00 |
| 0,200 | 0,26 | 2,00 | 23,35 | 30,00 | 100,00 | 150,0 | 100,00 |
| 0,300 | 0,83 | 3,00 | 42,41 | 40,00 | 100,00 | 175,0 | 100,00 |
| 0,400 | 1,41 | 4,00 | 58,43 | 50,00 | 100,00 | 200,0 | 100,00 |
| 0,500 | 1,93 | 5,00 | 70,95 | 60,00 | 100,00 | 250,0 | 100,00 |

Die aus der Partikelgrößenverteilung bestimmten Grenzwerte sind in Tabelle 2a zusammengefasst.

Tabelle 2a: Grenzwerte für die Partikelgrößenverteilung

| Grenzwert | Größe (μm) |
|---|---|
| $D_{10}$ | 1,26 |
| $D_{50}$ | 3,45 |
| $D_{90}$ | 7,74 |
| $D_{100}$ | 19,31 |

Bei einer Fortsetzung des Mischvorgangs bei Temperaturen über 80° C bilden sich Agglomerate mit einer deutliche gröberen Teilchengrößenverteilung, als sie in Figur 3 dargestellt ist.

Das oberflächenmodifizierte organophile Tonmaterial wird bei niedriger Drehzahl auf eine Temperatur zwischen 20 und 40° C abgekühlt. Dazu wird das auf 80° C erwärmte modifizierte organophile Tonmaterial in einen zweiten Mischer überführt, welcher eine Kühlvorrichtung umfasst, und in welchem das Mischgut auf eine Temperatur zwischen 20 und 40° C abgekühlt wird.

Das Schüttgewicht des erhaltenen Pulvers beträgt 480 g/l. Während der Durchführung des Experiments wurden in regelmäßigen Abständen Proben entnommen und die Schüttdichte bestimmt. Die Ergebnisse sind in Tabelle 3 zusammengefasst.

Tab. 3: Veränderung der Schüttdichte während der Modifizierung

| Mischzeit (min) | 1 | 2 | 3 | 4 | 5 | 6 | 7 | 7,5 | 8 |
|---|---|---|---|---|---|---|---|---|---|
| Schüttgewicht (g/l) | 240 | 242 | 242 | 267 | 280 | 301 | 344 | 480 | 560 |

Tabelle 3 zeigt, dass sich das Schüttgewicht nach ca. 4 Minuten Mischzeit erhöht, und dass nach einer Mischzeit von 7 bis 8 Minuten ein deutlicher Anstieg des Schüttgewichts eintritt. Dies entspricht dem Zeitraum, nach welchem auch eine Zunahme der Stromaufnahme des Mischers beobachtet wird.

Der Vergleich der Partikelgrößenverteilung des erfindungsgemäß modifizierten organophilen Tonmaterials (Figur 3) mit dem für die Herstellung als Ausgangsmaterial verwendeten organophilen Tonmaterial Nanofil® 5 (Figur 2) zeigt auf, dass durch den erfindungsgemäßen Trockenmischprozess eine feinere Partikelgrößenverteilung erzielt werden kann.

Die $D_{50}$-Werte der in den Beispielen 1 und 2 erhaltenen organophilen Tonmaterialien sind zum Vergleich noch einmal in Tabelle 4 aufgeführt.

Tabelle 4: $D_{50}$-Werte organophiler Tonmaterialien

| Nanofil® 5 (Beispiel 1) | 5,6 μm |
|---|---|
| Beispiel 2 | 3,4 μm |

Somit werden durch die erfindungsgemäße Oberflächenmodifizierung (Beispiel 2) folgende Vorteile erzielt:

- Erhöhung des Schüttgewichts um 100 %;
- Verringerung der Partikelgröße;
- Verbesserung der mechanischen Eigenschaften von Polypropylen, was durch folgende Einarbeitung der organophilen Tonmaterialien aus Beispiel 1 und Beispiel 2 nachgewiesen werden konnte.

Beispiel 3, Compoundierung

Die aus Beispiel 1 und Beispiel 2 erhaltenen organophilen Tonmaterialien werden wie folgt in die Blow molding Polypropylentype RB 307 MO (Hersteller: Borealis) eincompoundiert:

Es wird ein gleichlaufender Labordoppelschnecken-Extruder vom Typ ZE 25 (Berstorff) eingesetzt. Die Dosierung aller Rezepturkomponenten erfolgt jeweils gravimetrisch in den Haupttrichter. Die austretenden Compoundstränge werden im Wasserbad abgekühlt und granuliert.

Es wird in einem Verfahrensschritt mit einem Temperaturverlauf von 180° C bis 225° C extrudiert. Die Schneckendrehzahl beträgt 300 Umdrehungen pro Minute. Der Durchsatz beträgt 10 kg/Std.

Aus dem erhaltenen Granulat wurden Prüfkörper auf einer Spritzgussmaschine des Typs Ergotech 100/420-310 (Demag) hergestellt. Mit den erhaltenen Prüfkörpern wurde das E-Modul ($E_t$) nach ISO 527-2/1A/50 und die Kerbschlagzähigkeit (Sharpy) nach ISO 179/1EU bei 23° C ermittelt. Die gefundenen Werte sind in Tabelle 5 wiedergegeben.

Tabelle 5: Eigenschaften von Prüfkörpern

|  | RB 307 Mo (%) | Additiv (%) | E-Modul $E_t$ (GPa) | Kerbschlagzähigkeit (kJ/m$^2$) |
|---|---|---|---|---|
| Beispiel 1 | 5 | - | 0,68 | 14,7 |
| Beispiel 2 | - | 5 | 0,79 | 20,9 |

Wie aus Tabelle 5 ersichtlich, wurden mit dem Additiv aus Beispiel 2 verbesserte Eigenschaften hinsichtlich des E-Moduls und der Kerbschlagzähigkeit erhalten.

Beispiel 3

Beispiel 2 wurde wiederholt, wobei die Vermischung des organophilen Tonmaterials mit dem Additiv jedoch nicht unter Verwendung eines Heiz-Kühl-Mischers sondern unter Verwendung eines Intensivmischers der Firma Eirich unter Weglassung der Wärmezuführung während des Mischvorgangs durchgeführt wurde. Im Mischbehälter wurden die Komponenten Nanofil® 5 (1 kg), Kebonal 20 (100 g) und Lithosolvent PL (44 g) vorgelegt. Der Behälter wurde in den Mischer eingesetzt und Wirbler sowie Drehteller gestartet.

Füllgrad des Behälters: ca. 80 %
Wirblerantrieb: Stufe 2
Drehtellerantrieb: Stufe 2
Schüttgewicht Nanofil® 5: 243 g/l

Während des Mischvorgangs wurde regelmäßig die Temperatur des Mischgutes sowie die Stromaufnahme des Mischers ermittelt. Weiterhin wurde in regelmäßigen Abständen Proben entnommen und das Schüttgewicht bestimmt. Die Werte sind in Tabelle 6 zusammengefasst.

Tabelle 6: Prozessparameter bei Verwendung eines Intensivmischers

| Zeit | Temperatur | Stromaufnahme | Schüttgewicht |
|---|---|---|---|
| min | ° C | A | g/l |
| 1 | 19,5 | 5,5 | 274 |
| 2 | 19,7 | 5,5 | 271 |
| 3 | 19,6 | 5,5 | 281 |
| 4 | 19,6 | 5,5 | 295 |

Tabelle fortgesetzt

| Zeit | Temperatur | Stromaufnahme | Schüttgewicht |
|------|-----------|---------------|---------------|
| min | ° C | A | g/l |
| 5 | 19,7 | 5,5 | 289 |
| 6 | 19,7 | 5,5 | 284 |
| 7 | 19,5 | 5,5 | 292 |
| 8 | 19,6 | 5,5 | 296 |
| 9 | 19,6 | 5,5 | 287 |
| 10 | 19,7 | 5,5 | 294 |

Ferner wurde die Partikelgrößenverteilung des Ausgangsmaterials sowie des erhaltenen Produkts gemessen und der $D_{50}$-Wert bestimmt. Die Ergebnisse sind in Tabelle 7 zusammengefasst.

Tabelle 7: $D_{50}$-Wert bei Vermengung im Intensivmischer.

| Ausgangsmaterial | 7,7 $\mu$m |
|------------------|-----------|
| Endprodukt | 5,6 $\mu$m |

Wie aus Tabelle 7 ersichtlich, erhöht sich die Temperatur des Mischgutes während des Mischvorgangs nicht. Des weiteren wurde keine Erhöhung der Stromaufnahme des Mischers während der Mischzeit beobachtet. Das Schüttgewicht des modifizierten organophilen Tonmaterials erhöhte sich nur unwesentlich.

**Patentansprüche**

1.   Verfahren zur Modifikation, insbesondere zur Oberflächenmodifikation eines organophilen Tonmaterials, umfassend die folgenden Schritte:

a) Bereitstellen eines trockenen, pulverförmigen, organophilen Tonmaterials (Komponente a);
b) Bereitstellen von mindestens einem Additiv (Komponente b) zur Modifikation der Komponente a);
c) Intensives Vermischen der Komponenten a) und b) in einem hochscherenden Mischaggregat,

wobei kein Wasser oder Lösungsmittel zugesetzt wird oder für die Zugabe der Komponente b) verwendet wird, und wobei das mindestens eine Additiv (Komponente b) ausgewählt ist aus: Fettsäuren, Fettsäurederivaten, nichtanionischen organischen Komponenten mit mindestens einem aliphatischen oder cyclischen Rest mit 6 bis 32 Kohlenstoffatomen, und/oder Siloxankomponenten.

2.   Verfahren nach Anspruch 1, **dadurch gekennzeichnet, dass** das mindestens eine Additiv ein Fettsäurederivat, ausgewählt aus den hydrogenierten Derivaten, Alkoholderivaten, Aminderivaten oder deren Mischungen, den polymeren Fettsäuren, den Ketofettsäuren, den Fettsäurealkyloxazolinen und Fettsäurealkylbisoxazolinen oder deren Mischungen, den ungesättigten Fettsäuren, wie mono- oder poly-ungesättigten Hydroxyfettsäuren, umfasst.

3.   Verfahren nach einem der vorstehenden Ansprüche, **dadurch gekennzeichnet, dass** das mindestens eine Additiv eine nicht an ionische organische Komponente mit mindestens einem aliphatischen oder cyclischen Rest mit 8 bis 22 Kohlenstoffatomen, insbesondere 10 bis 18 Kohlenstoffatomen, umfasst.

4.   Verfahren nach einem der vorstehenden Ansprüche, **dadurch gekennzeichnet, dass** das mindestens eine Additiv ein Fettsäurederivat, ausgewählt aus den Gruppen der: Fettalkohole, gesättigt oder ungesättigt, einschließlich primärer als auch sekundärer Alkohole, insbesondere mit $C_6$ - $C_{22}$-Resten; Fettaldehyde, Fettketone; Fettalkoholpolyglykolether; Fettamine; Mono-, Di- und Triglyzeridester; Fettsäurealkanolamide; Fettsäureamide; Fettsäurealkylester; Fettsäureglukamide; Dicarbonsäureester; Wachse; wasserunlösliche fettsaure Seifen; Montanwachse; Paraffine und PE-Wachse, umfasst.

**5.** Verfahren nach einem der vorstehenden Ansprüche, **dadurch gekennzeichnet, dass** das mindestens eine Additiv ein Fettalkohol, ein Fettamid, ein Triglyceridester, ein Fettsäurealkylester oder ein Wachs umfasst.

**6.** Verfahren nach einem der vorstehenden Ansprüche, **dadurch gekennzeichnet, dass** das mindestens eine Additiv eine Siloxankomponente, ausgewählt aus den oligomeren oder polymeren Siloxanen oder Siloxanderivaten, insbesondere Oligoalkylsiloxan, Polydialkylsiloxane, Polydiarylsiloxane, oder eine Mischung daraus enthält, wobei die vorstehenden Siloxanderivate vorzugsweise mit zumindest einer reaktiven Gruppe funktionalisiert worden sind.

**7.** Verfahren nach einem der vorstehenden Ansprüche, **dadurch gekennzeichnet, dass** das intensive Vermischen bei erhöhter Temperatur durchgeführt wird.

**8.** Verfahren nach einem der vorstehenden Ansprüche, **dadurch gekennzeichnet, dass** die erhöhte Temperatur während des Mischens oberhalb des Schmelzpunktes des mindestens einen Additivs liegt, und, sofern mehr als ein Additiv vorhanden ist, die Temperatur oberhalb des Schmelzpunktes des höchstschmelzenden Additivs liegt.

**9.** Verfahren nach einem der vorstehenden Ansprüche, **dadurch gekennzeichnet, dass** die Temperatur während des intensiven Vermischens gesteigert wird.

**10.** Verfahren nach einem der vorstehenden Ansprüche, **dadurch gekennzeichnet, dass** die Temperatur während des intensiven Vermischens durch den Energieeintrag über das hochscherende Mischaggregat ansteigt.

**11.** Verfahren nach einem der vorstehenden Ansprüche, **dadurch gekennzeichnet, dass** die Temperatur durch Aufheizen der Mischung während des intensiven Vermischens erhöht wird.

**12.** Verfahren nach einem der vorstehenden Ansprüche, **dadurch gekennzeichnet, dass** das intensive Mischen in einem Temperaturbereich von 20 bis 200°C, insbesondere von 40 bis 150°C durchgeführt wird.

**13.** Verfahren nach einem der vorstehenden Ansprüche, **dadurch gekennzeichnet, dass** beim intensiven Vermischen eine Erhöhung des Schüttgewichts von mindestens 20 %, vorzugsweise mindestens 40 %, insbesondere 60 %, besonders bevorzugt 80 %, weiter bevorzugt mindestens 100 % bezogen auf das Schüttgewicht des eingesetzten pulverförmigen, organophilen Tonmaterials erzielt wird.

**14.** Verfahren nach einem der vorstehenden Ansprüche, **dadurch gekennzeichnet, dass** während des intensiven Vermischens ein Energieeintrag von mindestens 300 kW/m$^3$ erfolgt.

**15.** Verfahren nach einem der vorstehenden Ansprüche, **dadurch gekennzeichnet, dass** das intensive Vermischen so lange durchgeführt wird, bis eine Zunahme des Energieeintrags, gemessen anhand der Stromaufnahme des hochscherenden Mischaggregats, von mindestens 10 %, vorzugsweise mindestens 20 % erzielt wird.

**16.** Verfahren nach einem der vorstehenden Ansprüche, **dadurch gekennzeichnet, dass** die Zunahme des Energieeintrags am Ende des intensiven Mischens gemäß Anspruch 1 c), gemessen anhand der Stromaufnahme des hochscherenden Rühraggregats, im Bereich zwischen 10 und 50 %, insbesondere zwischen 20 und 30 %, ausgehend von der Stromaufnahme des hochscherenden Rühraggregats zu Beginn des intensiven Vermischens, liegt.

**17.** Verfahren nach einem der vorstehenden Ansprüche, **dadurch gekennzeichnet, dass** das intensive Vermischen durchgeführt wird, bis die Stromaufnahme innerhalb einer Minute um mindestens 20 % zunimmt.

**18.** Verfahren nach einem der vorstehenden Ansprüche, **dadurch gekennzeichnet, dass**, sofern die vorstehende Zunahme der Stromaufnahme nicht nach einer Gesamtzeitdauer des intensiven Vermischens von etwa 5 Min. erreicht wird, das verwendete hochscherende Mischaggregat zusätzlich beheizt wird.

**19.** Verfahren nach einem der vorstehenden Ansprüche, **dadurch gekennzeichnet, dass** die Partikelgröße, gemessen als D$_{50}$, um nicht mehr als 10 % während des intensiven Vermischens zunimmt, insbesondere nicht zunimmt oder sogar fällt, jeweils bezogen auf die ursprüngliche Partikelgröße, gemessen als D$_{50}$, der zum intensiven Vermischen eingesetzten Komponente a).

**20.** Verfahren nach einem der vorstehenden Ansprüche, **dadurch gekennzeichnet, dass** das intensive Vermischen abgebrochen wird, wenn das Schüttgewicht sich gegenüber dem anfänglichen Schüttgewicht der Komponente a) um höchstens 200 % erhöht hat.

21. Verfahren nach einem der vorstehenden Ansprüche, **dadurch gekennzeichnet, dass** sowohl die Komponente a) als auch die Komponente b) in Pulverform eingesetzt wird.

22. Verfahren nach einem der vorstehenden Ansprüche, **dadurch gekennzeichnet, dass** kein getrennter Kompaktierungsschritt oder Verdichtungsschritt durchgeführt wird.

23. Verfahren nach einem der vorstehenden Ansprüche, **dadurch gekennzeichnet, dass** unmittelbar nach dem intensiven Vermischen ein Abkühlen der Mischung erfolgt.

24. Verfahren nach einem der vorstehenden Ansprüche, **dadurch gekennzeichnet, dass** die Abkühlung auf eine Temperatur von weniger als etwa 40°C, insbesondere weniger als etwa 30°C erfolgt.

25. Verfahren nach einem der vorstehenden Ansprüche, **dadurch gekennzeichnet, dass** das Abkühlen über einen Zeitraum erfolgt, welcher dem 1- bis 3-fachen der Zeitdauer des vorangegangenen intensiven Vermischens gemäß Anspruch 1 c) entspricht.

26. Verfahren nach einem der vorstehenden Ansprüche, **dadurch gekennzeichnet, dass** das Abkühlen aktiv über eine Kühlung der Mischung bzw. des zur intensiven Vermischung verwendeten hochscherenden Mischaggregats erfolgt.

27. Verfahren nach einem der vorstehenden Ansprüche, **dadurch gekennzeichnet, dass** während des Abkühlens die Mischung weiter agitiert, insbesondere weiter intensiv vermischt wird.

28. Verfahren nach einem der vorstehenden Ansprüche, **dadurch gekennzeichnet, dass** das Abkühlen in einem getrennten, kühlbaren Mischer erfolgt.

29. Verfahren nach einem der vorstehenden Ansprüche, **dadurch gekennzeichnet, dass** als hochscherendes Mischaggregat ein Heiz-Kühl-Mischer oder eine Kombination aus einem Heizmischer und einem Kühlmischer verwendet wird.

30. Verfahren nach einem der vorstehenden Ansprüche, **dadurch gekennzeichnet, dass** das hochscherende Mischaggregat ausgewählt ist aus der Gruppe bestehend aus:

   a) Schaufelmischer;
   b) Schneckenmischer;
   c) Fluidmischer.

31. Verfahren nach einem der vorstehenden Ansprüche, **dadurch gekennzeichnet, dass** als hochscherendes Mischaggregat ein mechanischer Fluidmischer verwendet wird, der nach dem Fließbettprinzip arbeitet.

32. Verfahren nach einem der vorstehenden Ansprüche, **dadurch gekennzeichnet, dass** das hochscherende Mischaggregat Rührwerkzeuge und vorzugsweise mindestens ein Ableitblech aufweist.

33. Modifiziertes organophiles Tonmaterial, insbesondere oberflächenmodifiziertes teilchenförmiges, organophiles Tonmaterial, erhältlich nach einem Verfahren gemäß einem der vorstehenden Ansprüche.

34. Polymerzusammensetzung, enthaltend ein modifiziertes organophiles Tonmaterial nach dem vorstehenden Anspruch.

35. Polymerzusammensetzung nach Anspruch 34, **dadurch gekennzeichnet, dass** zumindest ein Polymer enthalten ist, ausgewählt aus der Gruppe, die gebildet ist aus Polyethylen und Copolymeren des Ethylens, wie HDPE (high density polyethylene), MDPE (medium density polyethylene), LLDPE, VLDPE, LDPE (low density polyethylene), ULDP, Ethylen-Hexen-Copolymere, Ethylen-Octen-Copolymere, Polyisobutylen, Ethylen-Propylen-Copolymere (EPM), Terpolymere des Ethylen-Propylen-Dien (EPDM), EBM (Ethylen-Butylkautschuk), EPDM, Ethylen-Vinylsilan-Copolymere, Ter- oder Copolymere der Acrylsäure (EA), oder Ethylen mit Ethylenacrylat und Acrylsäure (EAA) oder Methacrylsäure (EMA), EEA (Ethylen-Ethylacrylat), EBA (Ethylen-Butylacrylat), EVA (Ethylen-Vinylacetat), gepfropfte Copolymere des Ethylens mit Maleinsäureanhydrid (MAH), Polyvinylchlorid (PVC), Polyamid-6, Polyamid-66, Polyamid-12, Polyamid-4, Polypropylen und Polypropylencopolymere, Polyacrylate und Polymethacrylate (PMMA), Polycarbonat (PC), Polybutylenterephthalate (PBT), Polyethylenterephthalat (PET), fluorierte polymere Kohlenwasserstoffe, Rubber, TPE's, Blockcopolymere, TPU und Polyurethane, TPO, Siliconpolymere..

36. Verwendung eines modifizierten organophilen Tonmaterials nach Anspruch 33 als Additiv für eine Polymerzusammensetzung, insbesondere als Nanocomponsit-Additiv für eine Polymerzusammensetzung.

37. Präexfolierte Nanocomposit-Additive, erhältlich nach einem Verfahren gemäß einem der Ansprüche 1 bis 32.

38. Nanocomposit-Zusammensetzung, erhältlich durch Einarbeiten des Nanocomposit-Additivs gemäß Anspruch 37 in eine Polymerzusammensetzung.

**Claims**

1. A method for the modification, in particular for the surface modification of an organophilic clay material, comprising the following steps:

   a) preparing a dry powdered organophilic clay material (component a);
   b) preparing at least one additive (component b) for the modification of component a);
   c) intensive mixing of components a) and b) in a high-shearing mixing unit,

   wherein no water or solvent is added or is used for the addition of component b),
   and wherein the at least one additive (component b) is selected from: fatty acids, fatty acid derivatives, non-anionic organic components with at least one aliphatic or cyclic residue with 6 to 32 carbon atoms, and/or siloxane components.

2. A method according to Claim 1, **characterised in that** the at least one additive comprises a fatty acid derivative, selected from the hydrogenated derivatives, alcohol derivatives, amine derivatives or mixtures thereof, the polymeric fatty acids, the keto fatty acids, the fatty acid alkyloxazolines and fatty acid alkylbisoxazolines or mixtures thereof, the unsaturated fatty acids, such as mono or polyunsaturated hydroxy fatty acids.

3. A method according to one of the preceding Claims, **characterised in that** the at least one additive comprises a non-anionic organic component with at least one aliphatic or cyclic residue with 8 to 22 carbon atoms, in particular 10 to 18 carbon atoms.

4. A method according to any one of the preceding Claims, **characterised in that** the at least one additive comprises a fatty acid derivative, selected from the groups of the: fatty alcohols, saturated or unsaturated, including primary and secondary alcohols, in particular with $C_6$ - $C_{22}$ residues; fatty aldehydes, fatty ketones; fatty alcohol polyglycol ethers; fatty amines; mono, di and triglyceride esters; fatty acid alkanol amides; fatty acid amides; fatty acid alky esters; fatty acid glucamides; dicarboxylic acid esters; waxes; water-insoluble fatty acid soaps; montan waxes; paraffins and PE waxes.

5. A method according to any one of the preceding Claims, **characterised in that** the at least one additive comprises a fatty alcohol, a fatty amide, a triglyceride ester, a fatty acid alkyl ester or a wax.

6. A method according to any one of the preceding Claims, **characterised in that** the at least one additive contains a siloxane component, selected from the oligomeric or polymeric siloxanes or siloxane derivatives, in particular oligoalkyl siloxane, polydialkyl siloxanes, polydiaryl siloxanes, or a mixture thereof, wherein the preceding siloxane derivatives have been functionalised with at least one reactive group.

7. A method according to any one of the preceding Claims, **characterised in that** the intensive mixing is carried out at elevated temperature.

8. A method according to any one of the preceding Claims, **characterised in that** during the mixing the elevated temperature is above the melting point of the at least one additive and, if more than one additive is present, the temperature is above the melting point of the highest melting additive.

16

9. A method according to any one of the preceding Claims, **characterised in that** the temperature is increased during the intensive mixing.

10. A method according to any one of the preceding Claims, **characterised in that** the temperature rises during the intensive mixing as a result of the energy input via the high-shearing mixing unit.

11. A method according to any one of the preceding Claims, **characterised in that** the temperature is raised by heating the mixture during the intensive mixing.

12. A method according to any one of the preceding Claims, **characterised in that** the intensive mixing is carried out in a temperature range of from 20 to 200°C, in particular from 40 to 150°C.

13. A method according to any one of the preceding Claims, **characterised in that** during the intensive mixing an increase in the bulk weight of at least 20 %, preferably at least 40 %, in particular 60 %, especially preferably 80 %, further preferably at least 100 % in relation to the bulk weight of the powdered orgariophilic clay material used.

14. A method according to any one of the preceding Claims, **characterised in that** an energy input of at least 300 kW/m$^3$ takes place during the intensive mixing.

15. A method according to any one of the preceding Claims, **characterised in that** the intensive mixing is carried out until an increase in the energy input is attained, measured on the basis of the current consumption of the high-shearing mixing unit, of at least 10 %, preferably at least 20 %.

16. A method according to any one of the preceding Claims, **characterised in that** the increase in the energy input at the end of the intensive mixing according to Claim 1 c), measured on the basis of the current consumption of the high-shearing stirring unit, is in the range of between 10 and 50 %, in particular between 20 and 30 %, starting from the current consumption of the high-shearing stirring unit at the start of the intensive mixing.

17. A method according to any one of the preceding Claims, in that the intensive mixing is carried out until the current consumption increases by at least 20 % within one minute.

18. A method according to any one of the preceding Claims, **characterised in that**, if the preceding increase in the current consumption is not reached after a total time of the intensive mixing of approximately 5 mins., the high-shearing mixing unit used is additionally heated.

19. A method according to any one of the preceding Claims, **characterised in that** the particle size, measured as $D_{50}$, increases by not more than 10 % during the intensive mixing, in particular does not increase or even drops, in each case in relation to the original particle size, measured as $D_{50}$, of component a) used for the intensive mixing.

20. A method according to any one of the preceding Claims, **characterised in that** the intensive mixing is discontinued when the bulk weight has increased by at least 200 % in relation to the initial bulk weight of component a).

21. A method according to any one of the preceding Claims, **characterised in that** both component a) and component b) are used in powder form.

22. A method according to any one of the preceding Claims, **characterised in that** no separate compacting step or compressing step is carried out.

23. A method according to any one of the preceding Claims, **characterised in that** cooling of the mixture takes place after the intensive mixing.

24. A method according to any one of the preceding Claims, **characterised in that** the cooling to a temperature lower than approximately 40°C, in particular lower than approximately 30°C.

25. A method according to any one of the preceding Claims, **characterised in that** the cooling takes place over a period which corresponds to 1 to 3 times the period of the preceding intensive mixing according to Claim 1c).

26. A method according to any one of the preceding Claims, **characterised in that** the cooling takes place actively by way of a cooling of the mixture or of the high-shearing mixing unit used for the intensive mixing.

27. A method according to any one of the preceding Claims, **characterised in that** during the cooling the mixture is agitated further, in particular is intensively mixed further.

28. A method according to any one of the preceding Claims, **characterised in that** the cooling takes placed in a separate coolable mixer.

29. A method according to any one-of the preceding Claims, **characterised in that** a heating-cooling mixer or a combination of a heating mixer and cooling mixer is used as high-shearing mixing unit.

30. A method according to any one of the preceding Claims, **characterised in that** the high-shearing mixing unit is selected from the group comprising:

    a) blade mixers;
    b) screw mixers;
    c) fluid mixers.

31. A method according to any one of the preceding Claims, **characterised in that** a mechanical fluid mixer, which operates in accordance with the fluidised bed principle, is used as high-shearing mixing unit.

32. A method according to any one of the preceding Claims, **characterised in that** the high-shearing mixing unit has a stirring implements and preferably at least one deflector plate.

33. A modified organophilic clay material, in particular a surface-modified particulate organophilic clay material, which can be obtained in accordance with a method according to any one of the preceding Claims.

34. A polymer composition, containing a modified organophilic clay material according to the preceding Claim.

35. A polymer composition according to Claim 34, **characterised in that** at least one polymer is contained, selected from the group which is formed by polyethylene and copolymers of ethylene, such as HDPE (high density polyethylene), MDPE (medium density polyethylene), LLDPE, VLDPE, LDPE (low density polyethylene), ULDP, ethylene-hexene copolymers, ethylene octene copolymers, polyisobutylene, ethylene-propylene copolymers (EPM), terpolymers of ethylene-propylene diene (EPDM), EBM (ethylene-butyl rubber), EPDM, ethylene-vinyl silane copolymers, terpolymers or copolymers of acrylic acid (EA), or ethylene with ethylene acrylate and acrylic acid (EAA) or methacrylic acid (EMA), EEA (ethylene-ethyl acrylate), EBA (ethylene-butyl acrylate), EVA (ethylene-vinyl acetate, grafted copolymers of ethylene with maleic acid anhydride (MAH), polyvinyl chloride (PVC), polyamide 6, polyamide 66, polyamide 12, polyamide 4, polypropylene and polypropylene copolymers, polyacrylates and polymethacrylates (PMMA), polycarbonate (PC), polybutylene terephthalate (PBT), polyethylene terephthalate (PET), fluorinated polymeric hydrocarbons, rubber, TPEs, block copolymers, TPU and polyurethane, TPO, silicone polymers.

36. Use of a modified organophilic clay material according to Claim 33 as an additive for a polymer composition, in particular as a nanocomposite additive for a polymer composition.

37. Pre-exfoliated nanocomposite additives, obtained in accordance with the method according to any one of Claims 1 to 32.

38. Nanocomposite composition, obtained by incorporating the nanocomposite additive according to Claims 37 in a polymer composition.

**Revendications**

1. Procédé de modification, en particulier de modification de la surface, d'une matière argileuse organophile, d'une matière argileuse organophile, comprenant les étapes suivantes :

    a) fournir une matière argileuse organophile pulvérulente sèche (composant a) ;
    b) fournir au moins un additif (composant b) pour la modification du composant a) ;

c) mélanger intensivement les composants a) et b) dans une unité de mélange à fort cisaillement,

dans lequel ni eau, ni solvant ne sont ajoutés ou ne sont utilisés pour l'addition du composant b),
et dans lequel le au moins un additif (composant b) est choisi parmi : les acides gras, les dérivés d'acides gras, les composants organiques non anioniques avec au moins un groupe aliphatique ou cyclique contenant 6 à 32 atomes de carbone, et/ou les composants siloxanes.

2. Procédé selon la revendication 1, **caractérisé en ce que** le au moins un additif comprend un dérivé d'acide gras, choisi parmi les dérivés hydrogénés, les dérivés d'alcools, les dérivés d'amines ou leurs mélanges, les acides gras polymères, les acides gras cétoniques, les alkyloxazolines d'acides gras et les alkylbisoxazolines d'acides gras ou leurs mélanges, les acides gras insaturés tels que les hydroxyacides gras mono- ou poly-insaturés.

3. Procédé selon l'une quelconque des revendications précédentes, **caractérisé en ce que** le au moins un additif comprend un composant organique non anionique avec au moins un groupe aliphatique ou cyclique contenant 8 à 22 atomes de carbone, en particulier 10 à 18 atomes de carbone.

4. Procédé selon l'une quelconque des revendications précédentes, **caractérisé en ce que** le au moins un additif comprend un dérivé d'acide gras, choisi dans le groupe des : alcools gras, saturés ou insaturés, y compris les alcools primaires et aussi secondaires, en particulier ceux contenant des groupes en $C_6$ à $C_{22}$ ; aldéhydes gras, cétones grasses ; polyglycoléthers d'alcools gras; amines grasses ; esters de mono-, di- et tri-glycérides ; alcanolamides d'acides gras; amides d'acides gras ; esters alkyliques d'acides gras ; glucamides d'acides gras ; esters d'acides dicarboxyliques; cires ; savons d'acides gras insolubles dans l'eau; cires de lignite ; paraffines et cires de PE.

5. Procédé selon l'une quelconque des revendications précédentes, **caractérisé en ce que** le au moins un additif comprend un alcool gras, un amide gras, un ester de triglycéride, un ester alkylique d'acide gras ou une cire.

6. Procédé selon l'une quelconque des revendications précédentes, **caractérisé en ce que** le au moins un additif contient un composant siloxane, choisi parmi les siloxanes ou les dérivés de siloxanes oligomères ou polymères, en particulier les oligoalkylsiloxanes, les polydialkylsiloxanes, les polydiarylsiloxanes, ou un mélange de ceux-ci, dans lequel les dérivés de siloxane susmentionnés ont été fonctionnalisés, de préférence avec au moins un groupe réactif.

7. Procédé selon l'une quelconque des revendications précédentes, **caractérisé en ce que** le mélange intensif est réalisé à température élevée.

8. Procédé selon l'une quelconque des revendications précédentes, **caractérisé en ce que** la température élevée pendant le mélange est supérieure au point de fusion du au moins un additif, et, si plus d'un additif est présent, la température est supérieure au point de fusion de l'additif ayant le point de fusion le plus élevé.

9. Procédé selon l'une quelconque des revendications précédentes, **caractérisé en ce** la température augmente pendant le mélange intensif.

10. Procédé selon l'une quelconque des revendications précédentes, **caractérisé en ce que** la température monte pendant le mélange intensif en raison de l'apport énergétique de l'unité de mélange à fort cisaillement.

11. Procédé selon l'une quelconque des revendications précédentes, **caractérisé en ce que** la température est augmentée par le chauffage du mélange pendant le mélange intensif.

12. Procédé selon l'une quelconque des revendications précédentes, **caractérisé en ce** le mélange intensif est réalisé dans une gamme de températures allant de 20°C à 200°C, en particulier de 40°C à 150°C.

13. Procédé selon l'une quelconque des revendications précédentes, **caractérisé en ce que**, pendant le mélange intensif, une augmentation de la masse volumique apparente d'au moins 20%, de préférence d'au moins 40%, en particulier de 60%, de manière plus particulièrement préférée de 80%, de manière encore préférée d'au moins 100% est atteinte, par rapport à la masse volumique apparente de la matière argileuse organophile pulvérulente mise en oeuvre.

14. Procédé selon l'une quelconque des revendications précédentes, **caractérisé en ce qu'**un apport énergétique d'au

moins 300 kW/m$^3$ a lieu pendant le mélange intensif.

**15.** Procédé selon l'une quelconque des revendications précédentes, **caractérisé en ce que** le mélange intensif est réalisé jusqu'à ce qu'une augmentation de l'apport énergétique, mesurée d'après la consommation de courant de l'unité de mélange à fort cisaillement, d'au moins 10%, de préférence d'au moins 20% soit atteinte.

**16.** Procédé selon l'une quelconque des revendications précédentes, **caractérisé en ce que** l'augmentation de l'apport énergétique à la fin du mélange intensif selon la revendication 1 c), mesurée d'après la consommation de courant de l'unité de mélange à fort cisaillement, se situe dans une gamme comprise entre 10% et 50%, en particulier entre 20% et 30%, par rapport à la consommation de courant de l'unité de mélange à fort cisaillement au début du mélange intensif.

**17.** Procédé selon l'une quelconque des revendications précédentes, **caractérisé en ce que** le mélange intensif est réalisé jusqu'à ce que la consommation de courant augmente d'au moins 20% en une minute.

**18.** Procédé selon l'une quelconque des revendications précédentes, **caractérisé en ce que** l'unité de mélange à fort cisaillement utilisée est chauffée en plus si l'augmentation susmentionnée de la consommation de courant n'est pas atteinte après une durée totale du mélange intensif d'environ 5 minutes.

**19.** Procédé selon l'une quelconque des revendications précédentes, **caractérisé en ce que** la taille des particules du composant a) utilisé pour le mélange intensif, mesurée en tant que $D_{50}$, n'augmente pas de plus de 10% pendant le mélange intensif, en particulier **en ce qu'**elle n'augmente pas ou même qu'elle diminue, à chaque fois par rapport à la taille initiale des particules, mesurée en tant que $D_{50}$.

**20.** Procédé selon l'une quelconque des revendications précédentes, **caractérisé en ce que** le mélange intensif est interrompu lorsque la masse volumique apparente a augmenté d'au maximum 200% par rapport à la masse volumique apparente initiale du composant a).

**21.** Procédé selon l'une quelconque des revendications précédentes, **caractérisé en ce qu'**aussi bien le composant a) que le composant b) sont mis en oeuvre sous forme de poudre.

**22.** Procédé selon l'une quelconque des revendications précédentes, **caractérisé en ce qu'**aucune étape séparée de compactage ou de compression n'est réalisée.

**23.** Procédé selon l'une quelconque des revendications précédentes, **caractérisé en ce qu'**un refroidissement du mélange a lieu juste après le mélange intensif.

**24.** Procédé selon l'une quelconque des revendications précédentes, **caractérisé en ce que** le refroidissement a lieu à une température inférieure à environ 40°C, en particulier inférieure à environ 30°C.

**25.** Procédé selon l'une quelconque des revendications précédentes, **caractérisé en ce que** le refroidissement a lieu pendant une durée de 1 à 3 fois la durée du mélange intensif susmentionné selon la revendication 1 c).

**26.** Procédé selon l'une quelconque des revendications précédentes, **caractérisé en ce que** le refroidissement est réalisé de manière active par l'intermédiaire d'un refroidissement du mélange ou de l'unité de mélange à fort cisaillement utilisée pour le mélange intensif.

**27.** Procédé selon l'une quelconque des revendications précédentes, **caractérisé en ce que** l'agitation, en particulier le mélange intensif se poursuit pendant le refroidissement.

**28.** Procédé selon l'une quelconque des revendications précédentes, **caractérisé en ce que** le refroidissement a lieu dans un mélangeur séparé pouvant être refroidi.

**29.** Procédé selon l'une quelconque des revendications précédentes, **caractérisé en ce qu'**un mélangeur à chaud et à froid ou une combinaison d'un mélangeur à chaud et d'un mélangeur à froid est utilisé en tant qu'unité de mélange à fort cisaillement.

**30.** Procédé selon l'une quelconque des revendications précédentes, **caractérisé en ce que** l'unité de mélange à fort cisaillement est choisie dans le groupe formé par :

a) les mélangeurs à pales ;
b) les mélangeurs à vis ;
c) les mélangeurs à fluides.

31. Procédé selon l'une quelconque des revendications précédentes, **caractérisé en ce qu'**un mélangeur à fluides mécanique qui fonctionne selon le principe du lit fluidisé est utilisé en tant qu'unité de mélange à fort cisaillement.

32. Procédé selon l'une quelconque des revendications précédentes, **caractérisé en ce que** l'unité de mélange à fort cisaillement présente des outils d'agitation et de préférence au moins une chicane.

33. Matière argileuse organophile modifiée, en particulier matière argileuse organophile particulaire modifiée en surface, pouvant être obtenue par un procédé selon l'une quelconque des revendications précédentes.

34. Composition polymère, contenant une matière argileuse organophile modifiée selon la revendication précédente.

35. Composition polymère selon la revendication 34, **caractérisée en ce qu'**elle contient au moins un polymère, choisi dans le groupe constitué par le polyéthylène et les copolymères de l'éthylène tels que HDPE (polyéthylène haute densité), MDPE (polyéthylène moyenne densité), LLDPE, VLDPE, LDPE (polyéthylène basse densité), ULDP, les copolymères éthylène/hexène, les copolymères éthylène/octène, les polyisobutylènes, les copolymères éthylène/propylène (EPM), les terpolymères éthylène/propylène/diène (EPDM), EBM éthylène caoutchouc butylique, EPDM, les copolymères éthylène/vinylsilane, les ter- ou co-polymères de l'acide acrylique (EA), ou de l'éthylène avec l'acrylate d'éthylène et l'acide acrylique (EAA) ou méthacrylique (EMA), EEA (éthylène/acrylate d'éthyle), EBA (éthylène/acrylate de butyle), EVA (éthylène/acétate de vinyle), les copolymères greffés de l'éthylène avec l'anhydride maléique (MAH), le poly(chlorure de vinyle) (PVC), le polyamide-6, le polyamide-66, le polyamide-12, le polyamide-4, le polypropylène et les copolymères du polypropylène, les polyacrylates et les polyméthacrylates (PMMA), le polycarbonate (PC), le poly(téréphtalate de butylène) (PBT), le polytéréphtalate d'éthylène (PET), les hydrocarbures polymères fluorés, les caoutchoucs, les TPE, les copolymères séquencés, les TPU et les polyuréthannes, les TPO, les polymères siliconés.

36. Utilisation d'un matière organophile modifiée selon la revendication 33 en tant qu'additif pour une composition polymère, en particulier en tant qu'additif nanocomposite pour une composition polymère.

37. Additifs nanocomposites pré-exfoliés pouvant être obtenus par un procédé selon l'une quelconque des revendications 1 à 32.

38. Composition nanocomposite pouvant être obtenue en incorporant l'additif nanocomposite selon la revendication 37 dans une composition polymère.

Fig. 1

Fig. 2

Fig.3